# EUROPEAN PATENT APPLICATION

(11) **EP 4 671 994 A1**
(43) Date of publication of application: **31.12.2025**
(21) Application number: 25182581.6
(22) Date of filing: 13.06.2025
(51) Int. Cl.: G06F 11/07, G06F 11/00, G06F 11/14, G05B 19/042, G06F 11/20, G05B 19/05

(54) **CONTROLLER, CONTROL METHOD, AND CONTROL PROGRAM**

(30) Priority: 19.06.2024 JP 2024098756
(71) Applicant: Yokogawa Electric Corporation, Tokyo 180-8750 (JP)
(72) Inventor: SUGIUCHI, Takahiro, Musashino-shi, Tokyo 180-8750 (JP)
(74) Representative: Winter, Brandl - Partnerschaft mbB

(57) **Abstract**

A controller (10) collects data from each of field devices (20) constituting a plant via each of input/output modules (M), detects, based on the collected data, the input/output module (M) in which abnormality has occurred from among the input/output modules (M), and determines, based on the number of input/output modules (M) in each of which the occurrence of the abnormality has been detected, whether or not a soft error has occurred in the controller (10).

## Description

### FIELD

The present disclosure relates to a controller, a control method, and a control program.

### BACKGROUND

A soft error is a phenomenon in which internal information stored in a circuit provided in a semiconductor chip is crashed as a result of an inversion of the positive and negative of a semiconductor that manages holding of or calculation operation of bits for any reason (mainly, electron excitation of an interior atom caused by cosmic rays or radiation). Unlike a physical crash or degradation of a device, the soft error is able to return to the original state by rewriting the data (see, for example, Japanese Laid-open Patent Publication No. 2020-149467).

Here, it is difficult to appropriately determine an occurrence of the soft error. For example, if a soft error occurs in the interior of a control side central processing unit (CPU) module, a plurality of input/output modules (IOM) are sometimes simultaneously transitioned to be in a fail state (a function halt state) in a system even though the input/output modules are in a normal state.

Accordingly, the present disclosure has been conceived in light of the circumstances described above and an object thereof is to appropriately determine the occurrence of the soft error.

### SUMMARY

According to an aspect of the embodiments, a controller includes a first control unit that performs a process of collecting data from each device constituting a system via each input/output module, detecting, based on the collected data, the input/output module in which abnormality has occurred from among the input/output modules, and determining, based on the number of the input/output modules in each of which the occurrence of the abnormality has been detected, whether or not a soft error has occurred in the own controller.

According to an aspect of the embodiments, a control method that causes a computer to execute a process includes collecting data from each device constituting a system via each input/output module, detecting, based on the collected data, the input/output module in which abnormality has occurred from among the input/output modules, and determining, based on the number of the input/output modules in each of which the occurrence of the abnormality has been detected, whether or not a soft error has occurred in the own computer.

According to an aspect of the embodiments, a control program that causes a computer to execute a process includes collecting data from each device constituting a system via each input/output module, detecting, based on the collected data, the input/output module in which abnormality has occurred from among the input/output modules, and determining, based on the number of the input/output modules in each of which the occurrence of the abnormality has been detected, whether or not a soft error has occurred in the own computer.

### BRIEF DESCRIPTION OF THE DRAWINGS

FIG. 1 is a diagram illustrating an example of a configuration of an FCS;
FIG. 2 is a diagram illustrating a configuration example and a process example related to of an abnormality diagnosis system according to an embodiment;
FIG. 3 is a block diagram illustrating an example of a configuration of each device included in the abnormality diagnosis system according to the embodiment;
FIG. 4 is a diagram illustrating one example of a detection result storage unit included in a controller according to the embodiment;
FIG. 5 is a diagram illustrating one example of a determination result storage unit included in the controller according to the embodiment;
FIG. 6 is a flowchart illustrating one example of the flow of the process performed in the abnormality diagnosis system according to the embodiment; and
FIG. 7 is a diagram illustrating a configuration example of hardware according to the embodiment.

### DETAILED DESCRIPTION OF THE PREFERRED EMBODIMENTS

Preferred embodiments of a controller, a control method, and a control program according to one embodiment of the present disclosure will be explained in detail below with reference to the accompanying drawings. Furthermore, the present disclosure is not limited to the embodiments described below.

In the following, a configuration and a process related to an abnormality diagnosis system 100 according to the embodiment, a configuration and a process related to each device included in the abnormality diagnosis system 100, the flow of each process performed in the abnormality diagnosis system 100, and effects of the embodiment will be described.

### 1. Configuration and process related to abnormality diagnosis system 100

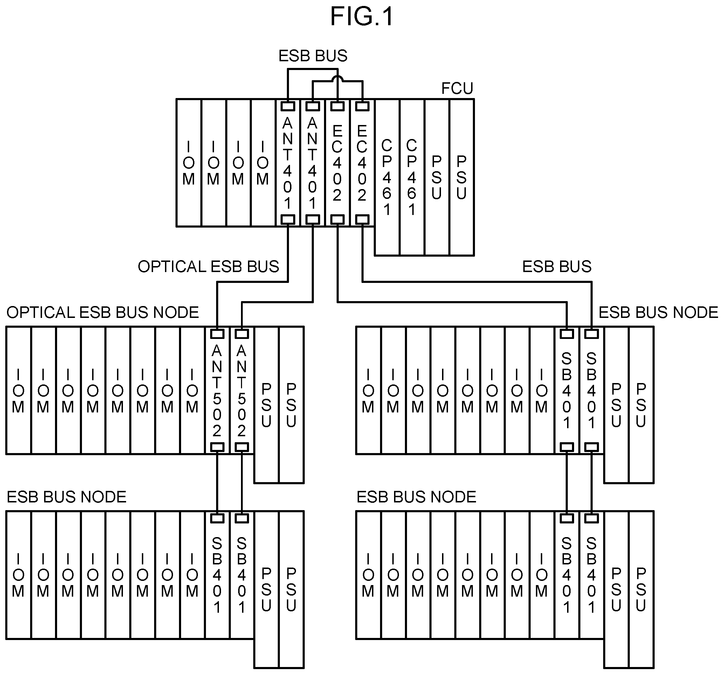

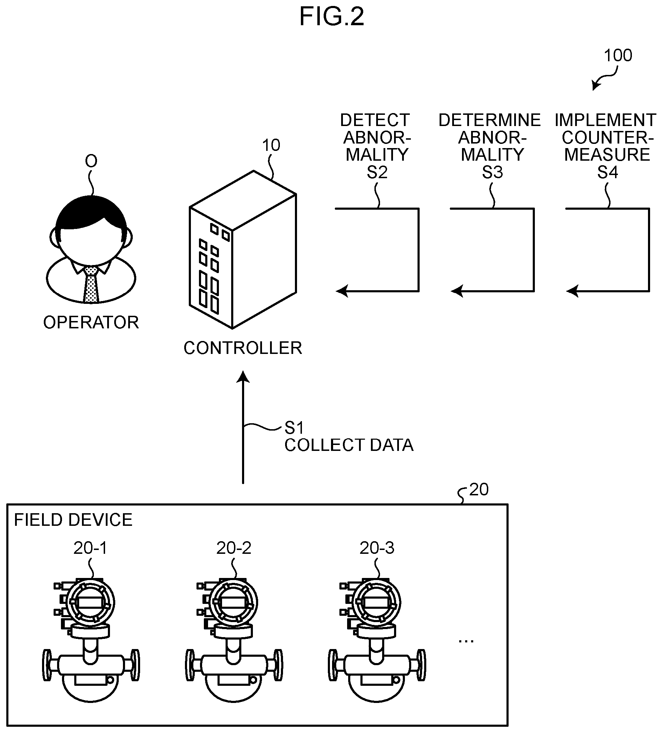

A configuration and a process related to the abnormality diagnosis system 100 according to the embodiment will be described with reference to FIG. 1 and FIG. 2. In the following, an example of a configuration of a field control station (FCS) will be described first, and then, an example of the overall configuration of the abnormality diagnosis system 100, an example of a process performed in the abnormality diagnosis system 100, and the effects of the abnormality diagnosis system 100 will be described. Moreover, in the embodiment, a description will be given by using a controller 10 that controls a plant as one example, but the example is not intended to limit a measurement target and fields of application.

### 1-1. Example of configuration of FCS

An example of a configuration of the FCS will be described with reference to FIG. 1. FIG. 1 is a diagram illustrating the example of the configuration of the FCS. The FCS is a plant control system, and is constituted by, for example, a field control unit (FCU), an extended serial backboard (ESB) bus node, and an optical ESB bus node. In the example illustrated in FIG. 1, the FCU corresponding to the controller 10 is constituted by a plurality of "Power Supply Units (PSUs)" that are a plurality of power supply modules, a plurality of "CP461" that are a plurality of processor modules, a plurality of "ANT401" that are a plurality of optical ESB bus repeater master modules, a plurality of "EC402" that are a plurality of ESB bus coupler modules, and a plurality of "IOM" that are a plurality of input/output modules M. Furthermore, the ESB bus node that manages a field device 20 is connected to the FCU and the like by an ESB bus, and is constituted by the plurality of "PSUs" that are the plurality of power supply modules, the plurality of "SB401" that are the plurality of ESB bus slave interface modules, and the plurality of "IOM" that are the plurality of input/output modules M. Furthermore, the optical ESB bus node that manages the field device 20 is connected to the FCU and the like by using an optical ESB bus, and is constituted by the plurality of "PSUs" that are the plurality of power supply modules, the plurality of "ANT502" that are the plurality of optical ESB bus repeater slave modules, and the plurality of "IOM" that are the plurality of input/output modules M.

The FCS described above is one example of the plant control system that is applied to the controller 10 included in the abnormality diagnosis system 100 according to the embodiment, but the example of the configuration of the plant control system is not particularly limited.

1-2. Example of the overall configuration of abnormality diagnosis system 100
an example of the overall configuration of the abnormality diagnosis system 100 will be described with reference to FIG. 2. FIG. 2 is a diagram illustrating a configuration example and a process example related to the abnormality diagnosis system 100 according to the embodiment. The abnormality diagnosis system 100 includes the controller (controller) 10 and a plurality of the field devices 20. Here, the controller 10 and the field devices 20 are communicably connected one another via a predetermined communication network (not illustrated) and the input/output modules M in a wired or wireless manner. Moreover, various kinds of communication networks, such as the Internet or a dedicated line, may be used for the predetermined communication network.

### 1-2-1. Control device 10

The controller 10 is a device that is used by an operator O who manages the plant, and is a device that makes a diagnosis on abnormality occurring in the plant. For example, the controller 10 is installed in an operator room, or the like that monitors the plant. Moreover, two or more of the controllers 10 may be included in the abnormality diagnosis system 100 illustrated in FIG. 1. Furthermore, the example illustrated in FIG. 1 illustrates a case in which the controller 10 is implemented by the FCU, but the controller 10 may also be implemented by a desktop personal computer (PC), a notebook PC, a smartphone, a server device, a cloud system, or the like.

### 1-2-2. Field device 20

The field device 20 (20-1, 20-2, 20-3, and ... ) is a device that is installed in the plant, and that acquires various kinds of data. For example, the field device 20 is a measurement device, such as a pressure meter, a flow meter, or a vibration meter, and is installed in a plant site.

### 1-2-3. Input/output module M

The input/output module M (M-1, M-2, M-3, ... ) enables transmission and reception of various kinds of data between the controller 10 and the field device 20. For example, the input/output module M may be connected, as an independent device, between the controller 10 and the field device 20, or may be built into the controller 10, or may be built into the field device 20.

### 1-3. Example of process performed in abnormality diagnosis system 100

An example of a process performed in the abnormality diagnosis system 100 will be described. In the following, a data collection process (Step S1), an abnormality detection process (Step S2), an abnormality determination process (Step S3), and a countermeasure implementation process (Step S4) will be described. Moreover, the processes performed at Steps S1 to S4 described below may be performed in different order. Furthermore, some of the processes performed at Steps S1 to S4 described below may be omitted.

### 1-3-1. Data collection process

At a first step, the controller 10 collects various kinds of data from the field device 20 via the input/output module M (Step S1). For example, the controller 10 collects, from the field device 20-1, the measurement data that has been acquired by the field device 20-1 via the input/output module M-1. Furthermore, the controller 10 collects, from the field device 20-2, the measurement data that has been acquired by the field device 20-2 via the input/output module M-2. Furthermore, the controller 10 collects, from the field device 20-3, the measurement data that has been acquired by the field device 20-3 via the input/output module M-3.

### 1-3-2. Abnormality detection process

At a second step, the controller 10 detects abnormality that has occurred in the input/output module M (Step S2). For example, the controller 10 makes a diagnosis on the collected pieces of measurement data, and detects, as the abnormality that has occurred in the input/output module M, data SUM abnormality, config SUM abnormality, data update abnormality, input/output module state abnormality, and the like.

Here, the data SUM abnormality indicates abnormality of a total value (SUM value) related to the data that is transmitted and received to and from the controller 10 and the input/output module M. Furthermore, the config SUM abnormality indicates abnormality of a total value (SUM value) related to various kinds of settings (config). Furthermore, the data update abnormality indicates a halt of an update process of count up, or the like. Furthermore, the input/output module state abnormality indicates abnormality related to a state, such as a state (status) of the input/output module M enters "0" that indicates an abnormality state, or the like.

At this time, the controller 10 counts the number of input/output modules M in each of which abnormality has occurred, and stores the type of the abnormality that has occurred. Furthermore, regarding abnormality caused by a physical factor, such as a removal of the input/output module M, regarding abnormality caused by a field factor, and the like, the controller 10 does not include these types of abnormality in the number of counts, because a plurality of input/output modules M may possibly be transitioned to be in a fail state at the same time other than a soft error. Then, the controller 10 repeats the above described process on all of the input/output modules M.

### 1-3-3. Abnormality determination process

At a third step, the controller 10 determines whether or not a soft error has occurred (Step S3). For example, in a case where the number of input/output modules M in each of which an occurrence of abnormality has been detected is equal to or greater than two, the controller 10 determines that a soft error has occurred in the controller 10. On the other hand, in a case where the number of input/output modules M in each of which an occurrence of abnormality has been detected is one, the controller 10 determines that a soft error does not occur in the controller 10 but abnormality has occurred in the input/output module M. Moreover, in a case where the number of input/output modules M in each of which an occurrence of abnormality has been detected is equal to or greater than two and is also equal to or greater than a predetermined number, the controller 10 may determine that a soft error has occurred in the controller 10. For example, in a case where the number of input/output modules M in each of which an occurrence of abnormality has been detected is equal to or greater than three, the controller 10 may determine that a soft error has occurred in the controller 10. In other words, the number of input/output modules M that is used to determine a soft error is not particularly limited as long as the number of input/output modules M is equal to or greater than two.

### 1-3-4. Countermeasure implementation process

At a fourth step, the controller 10 implements a countermeasure against the abnormality that has occurred (Step S4). For example, in a case where the controller 10 determines that a soft error has occurred in the controller 10, the controller 10 replaces a control right of each of the processes by changing each of the processes performed by a first control unit 13-1 that is a control side CPU to be performed by a second control unit 13-2 that is a standby side CPU. On the other hand, in a case where the controller 10 determines that abnormality has occurred in the input/output module M, the controller 10 causes the input/output modules M in which an occurrence of abnormality has been detected to be transitioned to be in a fail state.

### 1-4. Effects of abnormality diagnosis system 100

In the following, the outline of and a problem in an abnormality diagnosis system 100P according to the reference technology will be described first, and then, the effects of the abnormality diagnosis system 100 will be described.

### 1-4-1. Outline of abnormality diagnosis system 100P

The outline of the abnormality diagnosis system 100P according to the reference technology will be described. In the abnormality diagnosis system 100P, a controller 10P according to the reference technology is constituted to have a redundancy configuration formed of the control side CPU and the standby side CPU, and is connected to the plurality of input/output modules M. Furthermore, the control side CPU and the standby side CPU each have a system software and an input/output coprocessor. The controller 10P makes a diagnosis on the input/output module M by using system software and an input/output coprocessor as follows.

At a first step, the input/output coprocessor included in the control side CPU collects pieces of input data from the input/output module M-1, and outputs the input data to the system software included in the control side CPU. At a second step, the system software included in the control side CPU makes a diagnosis in order to check validity of the pieces of input data collected from the input/output module M-1. At a third step, in a case where the input data is abnormal (e.g.; the data SUM abnormality, the config SUM abnormality, the data update abnormality, or the input/output module state abnormality), the system software included in the control side CPU causes the input/output module M-1 to be transitioned to be in a fail state. Then, each of the input/output coprocessor and the system software included in the control side CPU makes a diagnosis on all of the input/output modules M of the input/output module M-2, the input/output module M-3, ... , and the like.

Furthermore, in a case where a program stored in the input/output coprocessor included in the control side CPU has been crashed due to an occurrence of a soft error, the controller 10P is also able to replace the control right of the CPUs. At this time, the controller 10P monitors a state in which the programs stored in the input/output coprocessor have been executed in the correct order, and, in a case where the programs have not been executed in the correct order, the controller 10P is able to change the CPU from the control side CPU to the standby side CPU, and is able to continue the control by using a normal CPU.

### 1-4-2. Problem in abnormality diagnosis system 100P

A problem in the abnormality diagnosis system 100P according to the reference technology will be described. In the abnormality diagnosis system 100P, if a soft error has occurred, the hardware included in the input coprocessor and control side CPU is not able to be properly operated caused by the soft error. At this time, in the abnormality diagnosis system 100P, even though the input/output modules M are in a normal state, the plurality of input/output modules M constituting the control system may sometimes be simultaneously transitioned to be in a fail state, and all of the input/output modules M may also sometimes be simultaneously transitioned to be in the fail state. In other words, in the abnormality diagnosis system 100P, as a result of the plurality of input/output modules M entering in the fail state caused by the occurrence of the soft error, this state may possibly consequently affect an operation of the plant. Furthermore, in the abnormality diagnosis system 100P, as a soft error countermeasure, it is possible to replace hardware parts, but it is desirable to implement a countermeasure related to the software in terms of a cost.

### 1-4-3. Outline of abnormality diagnosis system 100

The outline of the abnormality diagnosis system 100 according to the embodiment will be described. In the abnormality diagnosis system 100, the system software makes a diagnosis on the input data, and, in a case where abnormality has been detected in the plurality of input/output modules M at the same time, the system software determines that a soft error has occurred in the CPU, and continues the control by using a new control side CPU that is in a normal state by changing the control right of the CPUs, instead of causing the input/output module M to be transitioned to be in a fail state.

Specifically, in the abnormality diagnosis system 100, the following processes are performed. At a first step, in a diagnosis made on the input data, in a case where the controller 10 detects abnormality (data SUM abnormality, config SUM abnormality, a data update halt, or input/output module state abnormality) that is conceivably caused by a soft error, the controller 10 counts the number of input/output modules M in each of which the abnormality has occurred, and also stores the type of the detected abnormality, instead of immediately causing the input/output module M to be transitioned to be in the fail state. At this time, the controller 10 does not include, in the number of counts, the abnormality caused by a physical factor, the abnormality caused by a field factor, and the like. At a second step, the controller 10 repeats the above described process on all of the input/output modules M. At a third step, when the controller 10 ends the process of making the diagnosis on the input data stored in all of the input/output modules M, the controller 10 checks the number of input/output modules M in each of which abnormality has occurred, and, if the number of input/output modules M in each of which abnormality has occurred is equal to or greater than two, the controller 10 replaces the control right of the CPUs without causing the input/output module M to be transitioned to be in the fail state, and continues the control by using the new control side CPU that is in a normal state. On the other hand, in a case where the number of input/output modules M in each of which abnormality has occurred is one, the controller 10 causes the input/output module M to be transitioned to be in a fail state.

### 1-4-4. Effects of abnormality diagnosis system 100

The effects of the abnormality diagnosis system 100 according to the embodiment will be described. As a first effect, the abnormality diagnosis system 100 is able to understand the situation of all of the input/output modules M, and is able to prevent the plurality of input/output modules M from being simultaneously transitioned to be in a fail state by performing the determination of the soft error by using the system software that makes a diagnosis on the input data for the last time, regardless of the type of an abnormal operation caused by the soft error. As a second effect, the abnormality diagnosis system 100 is able to prevent the control right of the CPU from being erroneously replaced in a case where a soft error does not occur in the CPU but the input/output module M is truly in an abnormal state.

As described above, the abnormality diagnosis system 100 is able to appropriately determine an occurrence of a soft error.

### 2. Configuration and process related to each device included in abnormality diagnosis system 100

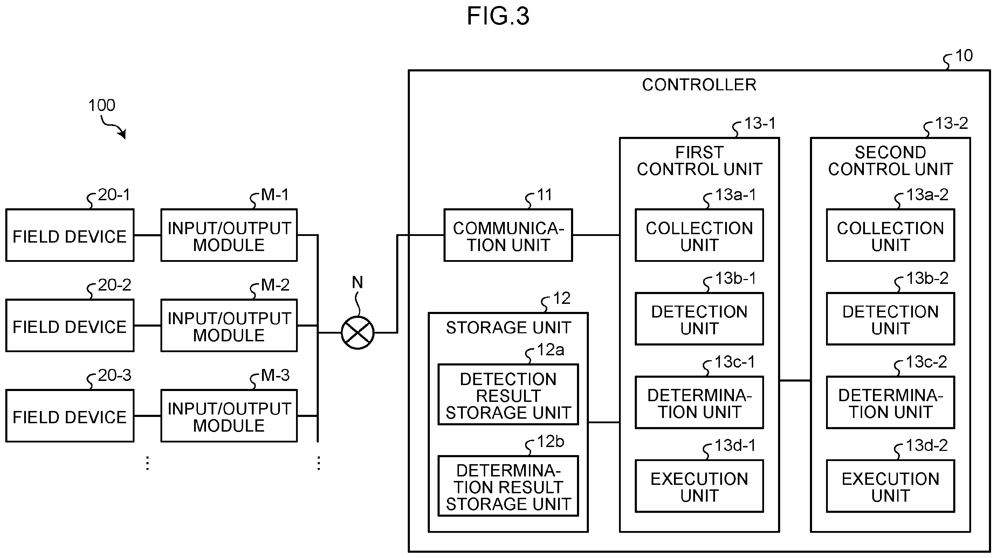

A configuration and a process related to each of the devices included in the abnormality diagnosis system 100 illustrated in FIG. 2 will be described with reference to FIG. 3. FIG. 3 is a block diagram illustrating an example of a configuration of each of the devices included in the abnormality diagnosis system 100 according to the embodiment. In the following, an example of the overall configuration of the abnormality diagnosis system 100 according to the embodiment, a configuration example and a process example related to the controller 10, a configuration example and a process example related to the field device 20, and a configuration example and a process example related to the input/output module M will be described.

### 2-1. Example of overall configuration of abnormality diagnosis system 100

An example of the overall configuration of the abnormality diagnosis system 100 will be described. The abnormality diagnosis system 100 includes the controller 10, the field device 20 (20-1, 20-2, 20-3, and ... ), and the input/output module M (M-1, M-2, M-3, and ... ). Furthermore, the controller 10 and the field device 20 are communicably connected by the communication network N and the input/output module M that are implemented by the Internet, a dedicated line, or the like. Furthermore, the field device 20-1 is connected to the input/output module M-1, the field device 20-2 is connected to the input/output module M-2, and the field device 20-3 is connected to the input/output module M-3. Moreover, in the example illustrated in FIG. 3, the input/output module M is installed in an outside of the controller 10 and the field device 20 as an independent device, but the input/output module M may be installed in the controller 10, or may be installed in the field device 20.

### 2-2. Configuration example and process example related to controller 10

A configuration example and a process example related to the controller 10 will be described. The controller 10 is constituted by a communication unit 11, a storage unit 12, the first control unit 13-1, and the second control unit 13-2. Moreover, a control unit 13 (the first control unit 13-1 and the second control unit 13-2) is constituted to have a dual redundant configuration, but may be constituted to have a triply or more redundant configuration. Furthermore, the controller 10 may include an input unit (for example, a keyboard and a mouse) that receives various kinds of operations from an administrator of the abnormality diagnosis system 100, and a display unit (for example, a liquid crystal display) for displaying various kinds of information.

### 2-2-1. Communication unit 11

The communication unit 11 manages data communication performed with the other devices. For example, the communication unit 11 performs data communication with each of the communication devices via a router, or the like. Furthermore, the communication unit 11 is able to perform data communication with a terminal that is used by an operator (not illustrated).

### 2-2-2. Storage unit 12

The storage unit 12 stores therein various kinds of information referred to by the control unit 13 when the control unit 13 operates, and various kinds of information that have been acquired when the control unit 13 operates. The storage unit 12 includes a detection result storage unit 12a and a determination result storage unit 12b. Here, the storage unit 12 is implemented by, for example, a semiconductor memory device, such as a random access memory (RAM) or a flash memory, or a storage device, such as a hard disk or an optical disk. Moreover, in the example illustrated in FIG. 3, the storage unit 12 is installed in the controller 10; however, the storage unit 12 may be installed outside the controller 10, or a plurality of storage units may be installed.

### 2-2-2-1. Detection result storage unit 12a

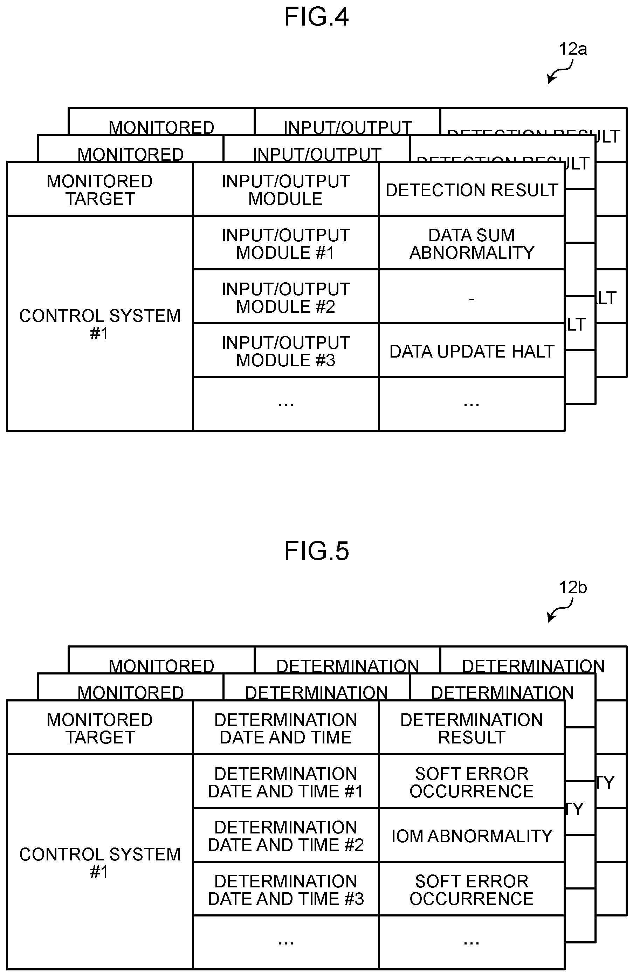

The detection result storage unit 12a stores therein a detection result. For example, the detection result storage unit 12a stores therein a detection result that has been output by a detection unit 13b-1 that will be described later and that is included in the first control unit 13-1. In the following, one example of the data stored in the detection result storage unit 12a will be described with reference to FIG. 4. FIG. 4 is a diagram illustrating one example of the detection result storage unit 12a included in the controller 10 according to the embodiment. In the example illustrated in FIG. 4, the detection result storage unit 12a includes items of a "monitored target", an "input/output module", and a "detection result".

The "monitored target" indicates identification information for identifying a monitored target or a control target monitored or controlled by the controller 10, and is, for example, an identification number or an identification symbol of the control system that controls the plant. The "input/output module" indicates identification information for identifying the input/output module M that is connected to the device that constitutes the system, and is, for example, an identification number or an identification symbol of the input/output module M, an identification number or an identification symbol of the field device 20 that is connected to the input/output module M, or the like. The "detection result" indicates a type of abnormality that has occurred in the input/output module M, and is, for example, the data SUM abnormality, the config SUM abnormality, the data update abnormality, the input/output module state abnormality, or the like.

In other words, FIG. 4 illustrates an example in which the detection result storage unit 12a stores therein data related to a monitored target identified by a "control system #1" is associated with the data of {input/output module: "input/output module #1", and detection result: "data SUM abnormality" }, {input/output module: "input/output module #2", and detection result: "-"}, {input/output module: "input/output module #3", and detection result: "data update halt"}, and the like. Moreover, in FIG. 4, "-" indicates that abnormality is not detected.

### 2-2-2-2. Determination result storage unit 12b

The determination result storage unit 12b stores therein a determination result. For example, the determination result storage unit 12b stores therein the determination result that has been output by a determination unit 13c-1 that will be described later and that is included in the first control unit 13-1. In the following, one example of the data stored in the determination result storage unit 12b will be described with reference to FIG. 5. FIG. 5 is a diagram illustrating one example of the determination result storage unit 12b included in the controller 10 according to the embodiment. In the example illustrated in FIG. 5, the determination result storage unit 12b includes items of a "monitored target", "determination date and time", and a "determination result".

The "monitored target" indicates identification information for identifying a monitored target or a control target monitored or controlled by the controller 10, and is, for example, an identification number or an identification symbol of the control system that controls the plant. The "determination date and time" indicates the date and time on which the determination result was output, and is represented in, for example, year, month, day, and is represented in, for example, hours, minutes, and seconds. The "determination result" indicates a determination result of the abnormality that has occurred in the control system, and is, for example, a "soft error occurrence" that indicates an occurrence of a soft error, "IOM abnormality" that indicates a failure or degradation of the input/output module M, or the like.

In other words, FIG. 5 illustrates an example in which the determination result storage unit 12b stores therein data related to a monitored target that is identified by the "control system #1" is associated with the data of {determination date and time: "determination date and time #1", and determination result: "soft error occurrence"}, {determination date and time: "determination date and time #2", and determination result: "IOM abnormality"}, {determination date and time: "determination date and time #3", and determination result: "soft error occurrence"}, and the like.

### 2-2-3. First control unit 13-1

The first control unit 13-1 manages the overall control of the controller 10. The first control unit 13-1 is a control unit that currently performs each of the processes and that is included in the control unit 13 constituted to have a dual redundant configuration, and is constituted by a collection unit 13a-1, the detection unit 13b-1, the determination unit 13c-1, and an execution unit 13d-1. Here, the first control unit 13-1 is implemented by, for example, an electronic circuit, such as a central processing unit (CPU) or a micro processing unit (MPU), or an integrated circuit, such as an application specific integrated circuit (ASIC) or a field programmable gate array (FPGA). Furthermore, the first control unit 13-1 is implemented by, for example, the system software and the input/output module coprocessor for executing each of the processes.

### 2-2-3-1. Collection unit 13a-1

The collection unit 13a collects various kinds of information. Moreover, the collection unit 13a may store the various kinds of collected information in the storage unit 12. In the following, a data collection process will be described.

### Data collection process

The collection unit 13a performs the data collection process. For example, the collection unit 13a collects pieces of data from each of the devices that constitute the system via each of the input/output modules M. At this time, the system is, for example, the plant. Furthermore, the device is, for example, the field devices 20 that constitute the plant. In other words, the collection unit 13a collects measurement data from, for example, each of the field devices 20 constituting the plant via each of the input/output modules M.

A specific example of the data collection process will be described. The collection unit 13a collects "measurement data #1" as the measurement data that has been acquired by the field device 20-1 via the "input/output module #1" that is the input/output module M-1. Furthermore, the collection unit 13a collects "measurement data #2" as the measurement data that has been acquired by the field device 20-2 via the "input/output module #2" that is the input/output module M-2. Furthermore, the collection unit 13a collects "measurement data #3" as the measurement data that has been acquired by the field device 20-3 via the "input/output module #3" that is the input/output module M-3.

### 2-2-3-2. Detection unit 13b-1

The detection unit 13b-1 outputs a detection result. Moreover, the detection unit 13b-1 may store the output detection result in the storage unit 12. In the following, the abnormality detection process will be described.

### Abnormality detection process

The detection unit 13b-1 performs the abnormality detection process. For example, the detection unit 13b-1 detects, on the basis of the collected data, the input/output module M in which abnormality has occurred from among the input/output modules M. At this time, the detection unit 13b-1 detects the data SUM abnormality as the abnormality that has occurred in the input/output module M. Furthermore, the detection unit 13b-1 detects the config SUM abnormality as the abnormality that has occurred in the input/output module M. Furthermore, the detection unit 13b-1 detects the data update halt as the abnormality that has occurred in the input/output module M. Furthermore, the detection unit 13b-1 detects the state abnormality of the input/output module M as the abnormality that has occurred in the input/output module M.

Here, the data SUM abnormality indicates abnormality of a total value (SUM value) related to the data that is transmitted and received between the controller 10 and the field device 20. Furthermore, the config SUM abnormality indicates abnormality of a total value (SUM value) related to various kinds of settings (config). Furthermore, the data update abnormality indicates a halt of an update process of count up, or the like. Furthermore, the input/output module state abnormality indicates abnormality of a state in which the state (status) of the input/output module M enters "0" that indicates an abnormality state.

A specific example of the abnormality detection process will be described. At a first step, the detection unit 13b-1 acquires the "measurement data #1", the "measurement data #2", and the "measurement data #3" as the pieces of data that have been output by the collection unit 13a-1. At a second step, the detection unit 13b-1 detects, from the "measurement data #1", the "data SUM abnormality" as the abnormality that has occurred in the "input/output module #1" that is the input/output module M-1, and detects, from the "measurement data #3", the "data update halt" as the abnormality that has occurred in the "input/output module #3" that is the input/output module M-3. Furthermore, the detection unit 13b-1 performs the abnormality detection process on all of the input/output modules M. At a third step, the detection unit 13b-1 stores, in the detection result storage unit 12a, the data of {input/output module: "input/output module #1", and detection result: "data SUM abnormality"}, {input/output module: "input/output module #3", and detection result: "data update halt"}, and the like as the detection result.

### 2-2-3-3. Determination unit 13c-1

The determination unit 13c-1 outputs the determination result. Moreover, the determination unit 13c-1 may store the output determination result in the storage unit 12. In the following, the abnormality determination process will be described.

### Abnormality determination process

The determination unit 13c-1 performs the abnormality determination process. For example, the determination unit 13c-1 determines whether or not a soft error has occurred in the controller 10 on the basis of the number of input/output modules M in each of which an occurrence of the abnormality has been detected. At this time, in a case where the number of input/output modules M in each of which an occurrence of abnormality has been detected is equal to or greater than two, the determination unit 13c-1 determines that a soft error has occurred in the controller 10. On the other hand, in a case where the number of input/output modules M in each of which an occurrence of abnormality has been detected is one, the determination unit 13c-1 determines that abnormality has occurred in the input/output module M in which an occurrence of abnormality has been detected.

As a specific example of the abnormality determination process, the "soft error occurrence" will be described. At a first step, the determination unit 13c-1 refers to the data of {input/output module: "input/output module #1", and detection result: "data SUM abnormality"}, {input/output module: "input/output module #2", and detection result: "-"}, {input/output module: "input/output module #3", and detection result: "data update halt"}, and the like as the detection result that is stored in the detection result storage unit 12a. At a second step, the number of input/output modules M in each of which an occurrence of the abnormality has been detected is two, so that the determination unit 13c-1 determines that this state is "soft error occurrence". At a third step, the determination unit 13c-1 outputs, as the determination result, the data of {determination date and time: "determination date and time #1", and determination result: "soft error occurrence"}, and stores the data in the determination result storage unit 12b.

Furthermore, as a specific example of the abnormality determination process, the "IOM abnormality" will be described. At a first step, the determination unit 13c-1 refers to the data of {input/output module: "input/output module #1", and detection result: "data SUM abnormality"}, {input/output module: "input/output module #2", and detection result: "-"}, {input/output module: "input/output module #3", and detection result: "-"}, and the like as the detection result that is stored in the detection result storage unit 12a. At a second step, the number of input/output modules M in each of which an occurrence of the abnormality has been detected is one, so that the determination unit 13c-1 determines this state is the "IOM abnormality". At a third step, the determination unit 13c-1 outputs, as the determination result, that data of {determination date and time: "determination date and time #2", and determination result: "IOM abnormality"}, and stores the output data in the determination result storage unit 12b.

### 2-2-3-4. Execution unit 13d-1

The execution unit 13d-1 performs various kinds of processes. Moreover, the execution unit 13d-1 may store the output execution result in the storage unit 12. In the following, the countermeasure implementation process will be described.

### Countermeasure implementation process

The execution unit 13d-1 performs the countermeasure implementation process. For example, the execution unit 13d-1 implements, in accordance with the determination result, a countermeasure against the abnormality that has occurred. At this time, the execution unit 13d-1 changes each of the processes performed by the first control unit 13-1 such that the second control unit 13-2 performs these processes. On the other hand, the execution unit 13d-1 causes the input/output module M in which the occurrence of the abnormality has been detected to be transitioned to be in a fail state.

As a specific example of the countermeasure implementation process, the "soft error occurrence" will be described. At a first step, the execution unit 13d-1 refers to the data of {determination date and time: "determination date and time #1", and determination result: "soft error occurrence"} as the determination result that is stored in the determination result storage unit 12b. At a second step, the execution unit 13d-1 replaces the control right from the first control unit 13-1 that currently performs each of the processes with the second control unit 13-2 that is in a standby state, and changes the control unit 13 such that the second control unit 13-2 performs each of the processes.

Furthermore, as a specific example of the countermeasure implementation process, the "IOM abnormality" will be described. At a first step, the execution unit 13d-1 refers to the data of {determination date and time: "determination date and time #2", and determination result: "IOM abnormality"} as the determination result that is stored in the determination result storage unit 12b. At a second step, the determination unit 13c-1 specifies that the input/output module M in which an occurrence of abnormality has been detected is the "input/output module #1" that is the input/output module M-1, and causes the "input/output module #1" to be transitioned to be in a fail state.

### 2-2-4. Second control unit 13-2

The second control unit 13-2 manages the overall control of the controller 10. The second control unit 13-2 is a control unit that is on standby and that is included in the control unit 13 constituted to have a dual redundant configuration, and is constituted by a collection unit 13a-2, a detection unit 13b-2, a determination unit 13c-2, and an execution unit 13d-2. Furthermore, the second control unit 13-2 is able to perform each of the processes that is performed by the first control unit 13-1. Here, the second control unit 13-2 is implemented by, for example, an electronic circuit, such as a CPU or an MPU. Furthermore, the second control unit 13-2 is implemented by, for example, the system software and the input/output module coprocessor for executing each of the processes. Moreover, a description of each of the processes performed, by the second control unit 13-2, after the control right is replaced as described above from the first control unit 13-1 by the execution unit 13d-1 included in the first control unit 13-1 is the same as each of the processes performed by the first control unit 13-1; therefore, a description thereof will be omitted.

### 2-3. Configuration example and process example related to field device 20

A configuration example and a process example related to the field device 20 will be described. The field device 20 is a device that constitutes the system. For example, the field device 20 is a device that constitutes the plant, and is a measurement device, such as a pressure meter, a flow meter, or a vibration meter.

The field device 20 acquires data in the system. For example, the field device 20 acquires measurement data on a pressure, a flow rate, a vibration, and the like generated in the plant. Furthermore, the field device 20 transmits the acquired measurement data to the controller 10 via the input/output module M.

The field device 20 receives a control signal that is output in the system. For example, the field device 20 receives the control signal that has been transmitted by the controller 10 via the input/output module M.

### 2-4. Configuration example and process example related to input/output module M

A configuration example and a process example related to the input/output module M will be described. The input/output module M relays data transmission and reception between the controller 10 and each of the devices that constitutes the system. For example, the input/output module M relays the data transmission and reception between the controller 10 and the field device 20 that constitutes the plant. At this time, the input/output module M relays the data transmission and reception in the form of data, such as an analog input (AI), an analog output (AO), a digital input (DI), or a digital output (DO).

### 3. Flow each process performed in abnormality diagnosis system 100

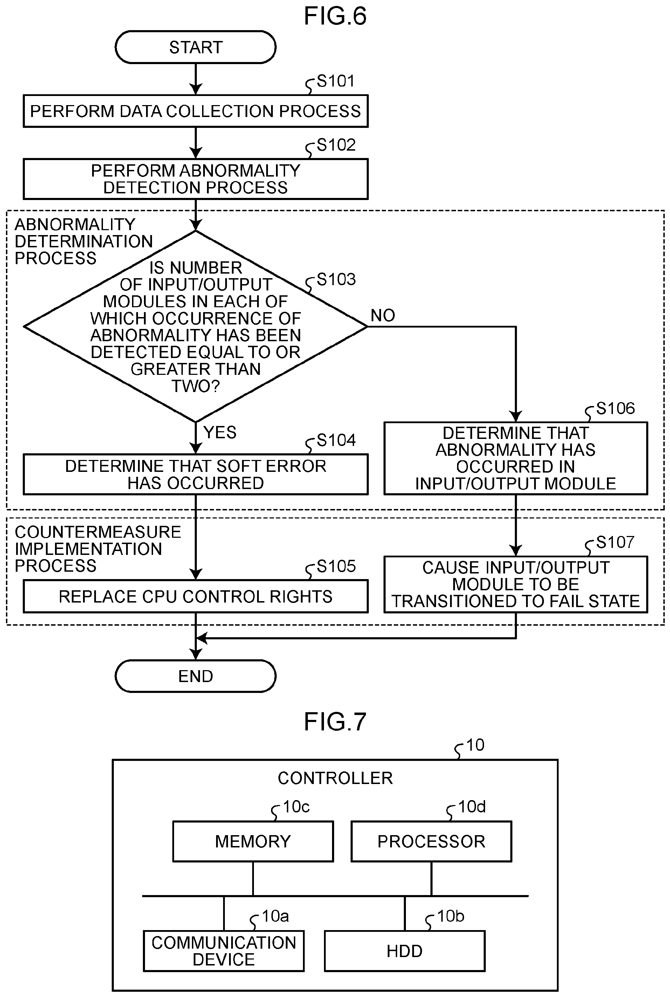

The flow of the process performed in the abnormality diagnosis system 100 according to the embodiment will be described with reference to FIG. 6. FIG. 6 is a flowchart illustrating one example of the flow of the abnormality diagnosis system 100 according to the embodiment. Moreover, the processes performed at Steps S101 to S107 described below may be performed in different order. Furthermore, some of the processes performed at Steps S101 to S107 described below may be omitted.

### 3-1. Data collection process

At a first step, the abnormality diagnosis system 100 performs the data collection process (Step S101). For example, the controller 10 collects the measurement data from the field device 20 (20-1, 20-2, 20-3, and ... ) via the input/output module M (M-1, M-2, M-3, and ... ).

### 3-2. Abnormality detection process

At a second step, the abnormality diagnosis system 100 performs the abnormality detection process (Step S102). For example, the controller 10 makes a diagnosis on the collected measurement data, and detects, as the abnormality that has occurred in the input/output module M (M-1, M-2, M-3, and ... ), the data SUM abnormality, the config SUM abnormality, the data update abnormality, the input/output module state abnormality, or the like.

### 3-3. Abnormality determination process

At a third step, the abnormality diagnosis system 100 performs the abnormality determination process. For example, if the number of input/output modules M in each of which an occurrence of the abnormality has been detected is equal to or greater than two (Yes at Step S103), the controller 10 determines that a soft error has occurred in the controller 10 (Step S104), and proceeds to the process at Step S105. On the other hand, if the number of input/output modules M in each of which an occurrence of the abnormality has been detected is one (No at Step S103), the controller 10 determines that a soft error does not occur in the controller 10 but abnormality has occurred in the input/output module M (Step S106), and proceeds to the process at Step S107.

### 3-4. Countermeasure implementation process

At a fourth step, the abnormality diagnosis system 100 performs a countermeasure implementation process. For example, if the controller 10 determines that a soft error has occurred in the controller 10, the controller 10 replaces the control right of each of the processes by changing each of the processes performed by the first control unit 13-1 that is the control side CPU to be performed by the second control unit 13-2 that is the standby side CPU (Step S105), and ends the process. On the other hand, if the controller 10 determines that abnormality has occurred in the input/output module M, the controller 10 causes the input/output module M in which an occurrence of the abnormality has been detected to be transitioned to be in a fail state (Step S107), and ends the process.

### 4. Effects of embodiment

Lastly, the effects of the embodiment will be described. In the following, a first to a ninth effects corresponding to the processes according to embodiment will be described.

### 4-1. First effect

As a first effect, in the process according to the embodiment described above, the controller 10 collects pieces of data from each of the devices constituting the system via each of the input/output modules M; detects, on the basis of the collected pieces of data, the input/output module M in which abnormality has occurred from among the input/output modules M; determines, on the basis of the number of input/output modules M in each of which the occurrence of the abnormality has been detected, whether or not a soft error has occurred in the controller 10; and implements a countermeasure against the abnormality that has occurred in accordance with the determination result. As a result of this, in this process, the controller 10 is able to appropriately determine the occurrence of the soft error.

### 4-2. Second effect

As a second step, in the process according to the embodiment described above, the controller 10 implements, in accordance with the determination result, a countermeasure against the abnormality that has occurred. As a result of this, in this process, the controller 10 is able to appropriately determine the occurrence of the soft error and implement an appropriate countermeasure against the abnormality that has occurred in the input/output module M.

### 4-3. Third effect

As a third effect, in the process according to the embodiment described above, in a case where the number of input/output modules M in each of which the occurrence of the abnormality has been detected is equal or greater than two, the controller 10 determines that the soft error has occurred in the controller 10, and changes each of the processes performed by the first control unit 13-1 to be performed by the second control unit 13-2 that is able to perform each of the processes performed by the first control unit 13-1. As a result of this, in this process, in a case where the soft error has occurred, by changing the control right of the CPUs, the controller 10 is able to implement an appropriate countermeasure against the abnormality that has occurred in the input/output module M.

### 4-4. Fourth effect

As a fourth effect, in the process according to the embodiment described above, in a case where the number of input/output modules M in each of which the occurrence of the abnormality has been detected is one, the controller 10 determines that abnormality has occurred in the input/output module M in which the occurrence of the abnormality has been detected, and causes the input/output module M in which the occurrence of the abnormality has been detected to be transitioned to be in a fail state. As a result of this, in this process, in a case where a soft error has not occurred, the controller 10 is able to implement an appropriate countermeasure against the abnormality that has occurred in the input/output module M by causing only the input/output module M in which the abnormality has occurred to be transitioned to be in a fail state.

### 4-5. Fifth effect

As a fifth effect, in the process according to the embodiment described above, the controller 10 detects the data SUM abnormality as the abnormality that has occurred in the input/output module M. As a result of this, in this process, the controller 10 is able to appropriately determine the occurrence of the soft error, and is able to implement an appropriate countermeasure against the data SUM abnormality that has occurred in the input/output module M.

### 4-6. Sixth effect

As a sixth effect, in the process according to the embodiment described above, the controller 10 detects the config SUM abnormality as the abnormality that has occurred in the input/output module M. As a result of this, in this process, the controller 10 is able to appropriately determine the occurrence of the soft error, and is able to implement an appropriate countermeasure against the config SUM abnormality that has occurred in the input/output module M.

### 4-7. Seventh effect

As a seventh effect, in the process according to the embodiment described above, the controller 10 detects a data update halt as the abnormality that has occurred in the input/output module M. As a result of this, in this process, the controller 10 is able to appropriately determine the occurrence of the soft error, and is able to implement an appropriate countermeasure against the data update halt that has occurred in the input/output module M.

### 4-8. Eighth effect

As an eighth effect, in the process according to the embodiment described above, the controller 10 detects state abnormality of the input/output module as the abnormality that has occurred in the input/output module M. As a result of this, in this process, the controller 10 is able to appropriately determine the occurrence of the soft error, and is able to implement an appropriate countermeasure against the state abnormality that has occurred in the input/output module M.

### 4-9. Ninth effect

As a ninth effect, in the process according to the embodiment described above, the system is the plant, and the devices are the field device 20 that constitutes the plant. As a result of this, in this process, the controller 10 is able to appropriately determine the occurrence of the soft error, and is able to implement an appropriate countermeasure against the abnormality that has occurred in the input/output module M.

### 5. System

The flow of the processes, the control procedures, the specific names, and the information containing various kinds of data or parameters indicated in the above specification and drawings can be arbitrarily changed unless otherwise stated.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

Furthermore, all or any part of each of the processing functions performed by each of the devices can be implemented by a CPU and by programs analyzed and executed by the CPU or implemented as hardware by wired logic.

### 6. Hardware

In the following, an example of a hardware configuration of the controller 10 will be described. Moreover, the other devices may also have a similar hardware configuration. FIG. 7 is a diagram illustrating an example of a hardware configuration according to the embodiment. As illustrated in FIG. 7, the controller 10 includes a communication device 10a, a hard disk drive (HDD) 10b, a memory 10c, and a processor 10d. Furthermore, each of the units illustrated in FIG. 7 is connected by a bus or the like with each other.

The communication device 10a is a network interface card or the like, and performs communication with another server. The HDD 10b stores therein a database and a program that causes the functions illustrated in FIG. 3 to operate.

The processor 10d operates the process that executes each of the functions described above in FIG. 3 or the like by reading the program that executes the same processes as those performed by each of the processing units illustrated in FIG. 3 from the HDD 10b or the like and loading the read program in the memory 10c. For example, the process executes the same functions as those performed by each of the processing units included in the controller 10. Specifically, the processor 10d reads, from the HDD 10b or the like, the program having the same functions as those performed by the collection unit 13a (13a-1 and 13a-2), the detection unit 13b (13b-1 and 13b-2), the determination unit 13c (13c-1 and 13c-2), the execution unit 13d (13d-1 and 13d-2), and the like. Then, the processor 10d executes the same processes as those performed by the collection unit 13a (13a-1 and 13a-2), the detection unit 13b (13b-1 and 13b-2), the determination unit 13c (13c-1 and 13c-2), the execution unit 13d (13d-1 and 13d-2), and the like.

In this way, the controller 10 operates as a device that executes various processing methods by reading and executing the program. Furthermore, the controller 10 is also able to implement the same functions as those described above in the embodiment by reading the above described program from a recording medium by a medium reading device and executing the read program. In addition, the program described above need not always be executed by the controller 10. For example, the present disclosure may also be similarly applied to a case in which another computer or another server executes the program or in a case in which another computer and another server cooperatively execute the program with each other.

The program may be distributed via a network, such as the Internet. Furthermore, the program may be executed by being recorded in a computer readable medium, such as a hard disk, a flexible disk (FD), a CD-ROM, a magneto-optical disk (MO), or a digital versatile disk (DVD), and being read from the recording medium by the computer.

According to the present disclosure, an advantage is provided in that it is possible to appropriately determine the occurrence of the soft error.

## Claims

1. A controller (10) comprising a first control unit (13-1) that performs a process of
collecting data from each device (20) constituting a system via each input/output module (M),
detecting, based on the collected data, the input/output module (M) in which abnormality has occurred from among the input/output modules (M), and
determining, based on the number of the input/output modules (M) in each of which the occurrence of the abnormality has been detected, whether or not a soft error has occurred in the own controller (10).

2. The controller (10) according to claim 1, wherein the first control unit (13-1) implements, in accordance with the determination result, a countermeasure against the abnormality that has occurred.

3. The controller (10) according to claim 2, further comprising
a second control unit (13-2) that is able to perform each of the processes performed by the first control unit (13-1), wherein the first control unit (13-1)
determines that, when the number of the input/output modules (M) in each of which the occurrence of the abnormality has been detected is equal or greater than two, the soft error has occurred in the first control unit (13-1) included in the own controller (10), and
changes each of the processes performed by the first control unit (13-1) to be performed by the second control unit (13-2).

4. The controller (10) according to claim 2 or 3, wherein the first control unit (13-1)
determines that, when the number of the input/output modules (M) in each of which the occurrence of the abnormality has been detected is one, the abnormality has occurred in the input/output module (M) in which the occurrence of the abnormality has been detected, and
causes the input/output module (M) in which the occurrence of the abnormality has been detected to be transitioned to be in a fail state.

5. The controller (10) according to any one of claims 1 to 4, wherein the first control unit (13-1) detects data SUM abnormality as the abnormality that has occurred in the input/output module (M).

6. The controller (10) according to any one of claims 1 to 5, wherein the first control unit (13-1) detects config SUM abnormality as the abnormality that has occurred in the input/output module (M).

7. The controller (10) according to any one of claims 1 to 6, wherein the first control unit (13-1) detects a data update halt as the abnormality that has occurred in the input/output module (M).

8. The controller (10) according to any one of claims 1 to 7, wherein the first control unit (13-1) detects state abnormality of the input/output module (M) as the abnormality that has occurred in the input/output module (M).

9. The controller (10) according to any one of claims 1 to 8, wherein the system is a plant, and the devices (20) are field devices that constitute the plant.

10. A control method that causes a computer (10) to execute a process comprising:
collecting data from each device (20) constituting a system via each input/output module (M);
detecting, based on the collected data, the input/output module (M) in which abnormality has occurred from among the input/output modules (M); and
determining, based on the number of the input/output modules (M) in each of which the occurrence of the abnormality has been detected, whether or not a soft error has occurred in the own computer (10).

11. A control program that causes a computer (10) to execute a process comprising:
collecting data from each device (20) constituting a system via each input/output module (M);
detecting, based on the collected data, the input/output module (M) in which abnormality has occurred from among the input/output modules (M); and
determining, based on the number of the input/output modules (M) in each of which the occurrence of the abnormality has been detected, whether or not a soft error has occurred in the own computer (10).
